# EUROPEAN PATENT SPECIFICATION

(11) **EP 4 086 078 B1**
(45) Date of publication and mention of the grant of the patent: **27.03.2024**
(21) Application number: 21171816.8
(22) Date of filing: 03.05.2021
(51) Int. Cl.: B64C 39/02, B33Y 80/00, B64C 1/08, B64U 101/00

(54) **AN ADAPTABLE LATTICE STRUCTURE FOR MULTI-MISSION DRONES**
ANPASSBARE VERBANDSTRUKTUR FÜR MULTIMISSIONSDROHNEN
UNE STRUCTURE EN TREILLIS ADAPTABLE POUR LES DRONES MULTI-MISSIONS

(43) Date of publication of application: 09.11.2022
(73) Proprietor: Airbus Defence and Space GmbH, 82024 Taufkirchen (DE)
(72) Inventor: ZECHERU, Mihai Ioan, 82024 Taufkirchen (DE)
(74) Representative: Frenkel, Matthias Alexander

(56) References cited:
- WO-A1-2021/119603
- WO-A1-2022/197685
- US-A1- 2010 276 538
- US-A1- 2014 374 532
- US-A1- 2016 378 108
- US-A1- 2017 043 883
- US-A1- 2017 183 870
- US-A1- 2019 069 379
- US-A1- 2019 127 063

## Description

### FIELD OF THE INVENTION

The present invention relates to an adaptable lattice structure for multi-mission drones and a method for making the adaptable lattice structure. The adaptable lattice structure is achieved via a plurality of voxels and allows for highly flexible drone designs as the size and shape of the drone can be easily altered dependent on the use of the drone.

### BACKGROUND TO THE INVENTION

The usage of lattice structures in drones is known to the skilled person. However, these structures are monolithic and cannot be adapted. Furthermore, many structures are configurable prior to building but after the drone has been constructed, they are no longer customizable to the mission the drone is undertaking. This can therefore lead to a drone which is not suitable to the mission.

WO 2022/197685 A1 relates to a construction system for mechanical metamaterials based on discrete assembly of a finite set of modular, mass-produced parts. A modular construction scheme enables a range of mechanical metamaterial properties to be achieved, including rigid, compliant, auxetic and chiral, all of which are assembled with a consistent process across part types, thereby expanding the functionality and accessibility of this approach. The incremental nature of discrete assembly enables mechanical metamaterials to be produced efficiently and at low cost, beyond the scale of the 3D printer. Additionally, a lattice structure constructed of two or more rigid, compliant, auxetic and chiral part types enable the creation of heterogenous macroscopic metamaterial structures.

US 2019/069379 A1 relates to a robotic agent swarm system having first robotic luminaire agents, and at least one control processor. Each agent has a suspension configured to hold the agent against an architectural surface, which includes a holonomic operational area; at least one propulsion motor configured to enable holonomic movement of the agent different locations on the architectural surface; a communication system configured to communicate with at least one other agent; a power supply operatively connected to the at least one propulsion motor and the communication system; and a light source oriented to illuminate a region around the architectural surface. The control processor is operatively associated with the agents and configured to transmit operating instructions, via at least one of the agent's respective communication system. The operating instructions include instructions for operating one or more agent's respective propulsion motor to move the agent holonomically within the holonomic operational area.

Other prior art can be found in US 2019/127063 A1 which generally relates to a three dimensional scalable and modular aircraft, in US 2017/043883 A1 which generally relates to a digital material assembly by passive means and modular isotropic lattice extruder system (MILES), in US 2016/378108 A1 which generally relates to collective unmanned aerial vehicle configurations, in US 2010/276538 A1 which generally relates to a cargo aircraft system, in US 2014/374532 A1 which generally relates to a modular vehicle lift system, in WO 2021/119603 A1 which generally relates to a fractal tetrahedron unmanned aircraft system assembly and in US 2017/183870 A1 which generally relates to digital flexural materials.

There is therefore a need for an adjustable, customizable drone structure which allows drones to be easily configured to the mission said drone is undertaking.

### SUMMARY OF THE INVENTION

The invention is set out in the independent claims. Preferred embodiments of the invention are outlined in the dependent claims.

According to a first aspect, an adaptable lattice structure for an Unmanned Aerial System (UAS) is described. The structure comprises a plurality of lattice voxels. Each lattice voxel comprises a plurality of same shape element, wherein the same shape elements are squares. Each same shape element comprises a plurality of connector elements, wherein the plurality of connector elements are configured to temporarily couple a first same shape element to at least a second same shape element. The plurality of same shape elements is configured to be temporarily coupled so as to form a tetradecahedron.

Furthermore, at least one of the connector elements on a first lattice voxel is configured to temporarily couple the first lattice voxel to a second lattice voxel.

Moreover, at least one of the plurality of lattice voxels is configured to be temporarily coupled to an adaptable system for operation of the UAS, wherein the adaptable system comprises at least one of a cargo and a payload.

The UAS described above may be any unmanned aerial system such as a drone, a fixed wing aircraft, a satellite, or any other UAS. Throughout the application, a drone is described but this is not limiting.

The adaptability of the lattice structure may allow for a highly customizable multi-mission drone structure. As a result, various parameters for the mission the drone is undertaking can be analyzed and then the drone can be constructed according to these parameters. These parameters may comprise range, sensors to be coupled to the drone, additional structural components such as landing gear, purpose of the mission, payload and any other suitable parameter. Additionally or alternatively, various parameters relating to the airframe of the multi-mission drone structure may be taken into account. These parameters may comprise range, tactical gear, tactical devices and tactical sensors to be coupled to the drone structure, sensors to be coupled to the drone structure, additional structural components such as landing gear, purpose of the mission, payload, propulsion, power supply weight, center of gravity or any other suitable parameter.

The structure requires a plurality of voxels due to the size of the voxels and to allow for adaptability of the lattice structure. Each of the voxels are preferably identical in size and shape but in some examples, may not be.

Each voxel comprises a plurality of same shape elements to allow for easy reproduction of said elements. This may allow for the shape of each voxel to be easily changed. For example, three voxels of six same shape elements each may be deconstructed and then reconstructed as two voxels of nine same shape elements each. This may further allow for an adjustable, customizable drone structure. The temporary coupling may be achieved via a nut and bolt, a screw, a hinge and a latch, or any other suitable coupling method. In some examples, the elements that comprise a voxel are not of the same shape.

Each same shape element comprises a plurality of connector elements, wherein the plurality of connector elements are configured to temporarily couple a first same shape element to at least a second same shape element. This may allow for a secure coupling between same shape elements within the same voxel thereby allowing a sturdy construction of the voxel and the lattice structure. The temporary coupling may be achieved via a nut and bolt, a screw, a hinge and a latch, or any other suitable coupling method. The same shape elements are temporarily coupleable to allow for easy reshaping of the voxels as described above.

The plurality of same shape elements are configured to be temporarily coupled so as to form a tetradecahedron. The same shape elements are temporarily coupleable to allow for easy reshaping of the voxels as described above.

At least one of the connector elements on a first lattice voxel is configured to temporarily couple the first lattice voxel to a second lattice voxel. This may allow for easy restructuring and customization of the adaptable lattice structure. The temporary coupling may be achieved via a nut and bolt, a screw, a hinge and a latch, or any other suitable coupling method.

The tetradecahedron may be a particularly advantageous shape as the 14 sides allow for a large amount of customization while maintaining a compact shape and a low weight of the voxels. The tertradecahedron shape may also allow for a plurality of triangles to be present in the lattice voxel which may further improve the structural strength of the voxels and thereby, the adaptable lattice structure.

In some examples, the plurality of connector elements on the first same shape element comprise a first at least one connector hole configured to be alignable with a second at least one connector hole on the second same shape element and/or the second lattice voxel. The alignability of the connector holes on the connector elements may allow for a secure temporary coupling of the same shape elements and/or voxels.

In some examples, the one or more of the connector elements comprise a strengthening element. The strengthening element may be a metal bracket, a hinge and latch, a covering, or any other suitable strengthening element.

In some examples, at least one of the plurality of lattice voxels is configured to be temporarily coupled to an adaptable system for operation of the multi-mission drone, wherein the adaptable system further comprises at least one of a battery and a propulsion system. The adaptable system may allow for the drone tc undertake many different types of mission such as surveillance, search and rescue, construction, or any other suitable mission. The battery may power the propulsion system and/or any electronic components in the system. The propulsion system may allow for the drone to fly. The propulsion system may comprise propellers, rotors, engines or any other suitable method of propulsion and the fuel needed to power the propulsion system. The cargo may be any suitable cargo for the mission the drone is undertaking. The payload may comprise a camera system which may comprise conventional cameras, infrared cameras, ultraviolet cameras, or any other suitable type of camera. Additionally or alternatively, any other suitable payloads may be part of the adaptable system. The adaptable system may comprise any suitable component that allows the drone to undertake its mission.

The multi-mission drone may, in some examples, comprise a flight controller which is embedded within one or more of the lattice voxels. The flight controller may be embedded in a space between one or more voxels. In some examples, the flight controller may be modular.

The design of the adaptable system may allow it to be replaced and/or reused on a new adaptable lattice structure design.

In some examples, each of the plurality of same shape elements and/or the plurality of lattice voxels are 3D-printed. The 3D-printing may allow for a simple construction of the elements and/or the voxels. In particular, the ability for the elements and/or voxels to be 3D-printed may allow for easy customization of the adaptable lattice structure via a computer program and may allow for simple construction of the lattice structure in remote areas as all is needed is a power supply for the printer. The 3D-printing may also allow for the same shape elements and/or the lattice voxels to be made of the same material or different materials. The material may be dependent the drone mission parameters. In cases where the payload of the drone is light, the material may be plastic. In cases where the payload is heavy, the material may be carbon fiber reinforced polymer (CFRP). However, any suitable material can be used, such as biodegradable materials. In some examples, different areas of the adjustable lattice may be made from different materials. For example, in a non-limiting example, the central hub of the drone may be made from voxels comprising CFRP whereas the arms of the drone may be made from voxels comprising plastics.

In some examples, each of the plurality of same shape elements and/or the plurality of lattice voxels are manufactured by Selective Laser Sintering technology and/or Fused Deposition Modelling technology and/or xFiber filament winding technology and/or carbon fiber reinforced plastic cutting technology and/or metal machining technology and/or injection molding technology.

In some examples, the first and second same shape elements and/or the first and second lattice voxels are configured to be temporarily coupled during the 3D-printing process. If the elements and/or voxels are temporarily coupled during the printing process, this may allow for a particularly quick deployment of the drone in emergency situations.

In some examples, at least one parameter of the plurality of same shape elements and/or the plurality of lattice voxels is configured to be changed before the manufacture of said plurality of same shape elements and/or plurality of lattice voxels, wherein the parameters comprise a lattice voxel size, a first thickness, a second thickness, a dimension of the plurality of connector elements, and a parameter of the plurality of connector elements. The parameter adjustment may be undertaken by a computer program or any other suitable method. The lattice voxel size may be defined as a maximum diameter of the constructed voxel. The first and second thicknesses may be defined as the thicknesses of one or more beams that make up a same shape element. The first and second thicknesses may be in different axes, for example, the first thickness may be in the x-axis and the second thickness in the y-axis. The first and second thicknesses may be dependent on the parameters of the mission the drone is undertaking. The beams may be of a rectangular cross section, a circular cross section, or any other suitable cross section. A dimension of the connector elements may be defined a size of the connector elements and/or a thickness of the connector elements and/or any other suitable parameter. A parameter of the connector elements may be defined as the number of connector holes within a connector element and/or a dimension of the connector holes and/or a material for the connector element and/or any other suitable parameter. The at least one parameter may also include a material from which to construct the elements and/or voxels. The parameters for each element and/or voxel may be identical or alternatively, may be different. The use of different materials may allow for the adaptable lattice structure to be more resilient or more flexible depending on the mission the drone is undertaking. Any of the above-mentioned parameters may be dependent on the parameters of the mission the drone is undertaking.

In some examples, one or more of the plurality of lattice voxels and/or the adaptable system comprises one or more sensors. The sensors may be communicatively coupled to a computer either onboard in the adaptable system or on the ground, wherein the computer comprises an AI algorithm. The one or more sensors may allow for the lattice voxel parameters to be set automatically by the UAS design itself. This may allow for the operator of the drone to receive real-time information about the state of the drone and allow the operator to make adjustments to the drone when it has landed in order to optimize the drone for the mission. In some examples, the AI algorithm suggests adjustments to be made to the adaptable lattice structure. The sensors may be configured to sense G-Force, strain, battery level or any other suitable parameter.

In a non-limiting example, if the drone is used in a remote application or in a conflict area, the drone may be dismantled while the plurality of sensors and the adaptable system are maintained. Based on the sensor observations, a smaller observation drone can be modified and constructed on the field.

In a second non-limiting example, the drone may be used for subscale flight testing. In this scenario, new sensors configured to sense different parameters may be easily tested in flight and/or used on the adaptable system in order to impact test payloads by dropping them. This may result in a drone which can be used as a testing platform and/or as an extremely flexible concept.

In some illustrative examples, not covered by the scope of the appended claims, one or more of the plurality of voxels are adaptor voxels. The adaptor voxel may be similar to the lattice voxels described above but have a bespoke three dimensional polygon design. The adaptor voxel may comprise elements which are not of the same shape. The adaptor voxel may allow for voxels of differing sizes to be coupled to each other thereby allowing for a very customizable and flexible lattice structure.

In some illustrative examples, not covered by the scope of the appended claims, an adaptable lattice structure may comprise a 100mm diameter lattice voxel and a 60mm diameter lattice voxel. The adaptor voxel may be designed in such a way so the diameter of the adaptor voxel at a first side is 100mm and the diameter at a second side is 60mm. The adaptor voxel may then be coupled to the 100mm lattice voxel and the 60mm lattice voxel simultaneously.

In some illustrative examples, not covered by the scope of the appended claims, the adaptor voxel and the elements used to make the adaptor voxel are constructed in the same manner as the other lattice voxels described in this application. In some illustrative examples, not covered by the scope of the appended claims, the adaptor voxel and the elements used to make the adaptor voxel are made of the same materials as the other lattice voxels described in this application. In some illustrative examples, not covered by the scope of the appended claims, the design process of the adaptor voxel and the elements used to make the adaptor voxel is the same as described in relation to the other lattice voxels described in this application.

According to a second aspect, a method for constructing an adaptable lattice structure for an Unmanned Aerial System (UAS) is described. The adaptable lattice structure comprises a plurality of lattice voxels, wherein each lattice voxel comprises a plurality of same shape elements, wherein the same shape elements are squares, and wherein each same shape element comprises a plurality of connector elements. The method comprises temporarily coupling a first connector element of a first same shape element to at least a second connector element of at least a second same shape element. The method further comprises temporarily coupling the plurality of same shape elements so as to form a tetradecahedron. The method further comprises temporarily coupling at least one of the plurality of the connector elements on a first lattice voxel to at least one of the plurality of the connector elements a second lattice voxel.

The method further comprises temporarily coupling at least one of the plurality of lattice voxels to an adaptable system for operation of the UAS, wherein the adaptable system comprises at least one of a cargo and a payload.

The structure requires a plurality of voxels due to the size of the voxels. Each of the voxels are preferably identical in size and shape but in some examples, may not be. Each voxel comprises a plurality of same shape elements to allow for easy reproduction of said elements. This may allow for the shape of each voxel to be easily changed. For example, three voxels of six same shape elements each may be deconstructed and then reconstructed as two voxels of nine same shape elements each. This may further allow for an adjustable, customizable drone structure. In some examples, not all of the elements are of the same shape.

Each same shape element comprises a plurality of connector elements, wherein the plurality of connector elements. These connector elements may allow for a secure coupling between same shape elements within the same voxel thereby allowing a sturdy construction of the voxel and the lattice structure. The temporary coupling may be achieved via a nut and bolt, a screw, a hinge and a latch, or any other suitable method. The same shape elements are temporarily coupleable to allow for easy reshaping of the voxels as described above. The construction of the connector elements may be dependent on the parameters of the mission that the drone is undertaking and/or the parameters of the same shape elements and/or the parameters of the lattice voxels. In some examples, each of the connector elements on a same shape element is the same. Alternatively, the connector elements may be different i.e. two or more connector element constructions.

The temporary coupling of same shape elements to each other may allow for the easy reshaping of the voxels as described above. The temporary coupling may be achieved via a nut and bolt, a screw, a hinge and a latch, or any other suitable method.

The temporary coupling of the plurality of same shape elements so as to form a three dimensional lattice voxel may allow for easy reshaping of the voxels as described above. This three dimensional shape may be any shape which allows the drone to undertake its mission.

The temporary coupling of the first lattice voxel and the second lattice voxel via the connector elements may allow for easy restructuring and customization of the adaptable lattice structure. The temporary coupling may be achieved via a nut and bolt, a screw, a hinge and a latch, or any other suitable method.

The tetradecahedron may be a particularly advantageous shape as the 14 sides allow for a large amount of customization while maintaining a compact shape and a low weight of the voxels. The tertradecahedron shape may also allow for a plurality of triangles to be present in the lattice voxel which may further improve the structural strength of the voxels and thereby, the adaptable lattice structure.

In some examples, the plurality of connector elements on the first same shape element comprise a first at least one connector hole, and wherein the method further comprises aligning a second at least one connector hole on the second same shape element and/or the second lattice voxel with the first at least one connector hole. The alignability of the connector holes on the connector elements may allow for a secure temporary coupling of the same shape elements and/or voxels.

In some examples, the method further comprises temporarily coupling at least one of the plurality of lattice voxels to an adaptable system for operation of the multi-mission drone, wherein the adaptable system further comprises at least one of a battery and a propulsion system. The adaptable system may allow for the drone to undertake many different types of mission such as surveillance, search and rescue, construction, or any other suitable mission. The battery may power the propulsion system and/or any electronic components in the system. The propulsion system may allow for the drone to fly. The propulsion system may comprise propellers, rotors, engines or any other suitable method of propulsion and the fuel needed to power the propulsion system. The cargo may be any suitable cargo for the mission the drone is undertaking. The payload may comprise a camera system may comprise conventional cameras, infrared cameras, ultraviolet cameras, or any other suitable type of camera. Additionally or alternatively, any other suitable payloads may be part of the adaptable system.

In some examples, the method further comprises 3D-printing each of the plurality of same shape elements and/or the plurality of lattice voxels. The 3D-printing may allow for a simple construction of the elements and/or the voxels. In particular, the ability for the elements and/or voxels to be 3D-printed may allow for easy customization of the adaptable lattice structure via a computer program and may allow for simple construction of the lattice structure in remote areas as all is needed is a power supply for the printer.

In some examples, the method further comprises temporarily coupling the first and second same shape elements and/or the first and second lattice voxels during the 3D-printing process. If the elements and/or voxels are temporarily coupled during the printing process, this may allow for a particularly quick deployment of the drone in emergency situations.

In some examples, the method further comprises changing at least one parameter of the plurality of same shape elements and/or the plurality of lattice voxels before the manufacture of said plurality of same shape elements and/or plurality of lattice voxels, wherein the parameters comprise a lattice voxel size, a first thickness, a second thickness ,a dimension of the plurality of connector elements and a parameter of the plurality of connector elements. The parameter adjustment may be undertaken by a computer program or any other suitable method. The lattice voxel size may be defined as a maximum diameter of the constructed voxel. A dimension of the connector elements may be defined a size of the connector elements and/or a thickness of the connector elements and/or any other suitable parameter. A parameter of the connector elements may be defined as the number of connector holes within a connector element and/or a dimension of the connector holes and/or a material for the connector element and/or any other suitable parameter. The at least one parameter may also include a material from which to construct the elements and/or voxels. The parameters for each element and/or voxel may be identical or alternatively, may be different.

According to a third aspect, we describe a use of the adaptable lattice structure for an Unmanned Aerial System and/or a use of the Unmanned Aerial System and/or a use of the method for constructing an adaptable lattice structure for an Unmanned Aerial System.

As described above, the adaptable lattice structure and the method for constructing the adaptable lattice structure may allow for an adjustable, customizable drone structure which allows drones to be easily configured to the mission said drone is undertaking. The usage of the adaptable lattice structure and/or the method may include any or all of the benefits as described in the first and second aspects above.

According to a fourth illustrative aspect, not covered by the scope of the appended claims, we describe an Unmanned Aerial System comprising the adaptable lattice structure. This may allow for an adjustable, customizable multi-mission drone which is easily configured to the mission said drone is undertaking. The multi-mission drone using the adaptable lattice structure may include any or all of the benefits of the usage of the adaptable lattice structure as described above in relation to the first to third aspects above.

The above described aspects may, in some examples, be part of the design life cycle of the drone. The life cycle may comprise the steps of:
i) Defining the mission according to the mission parameters;
ii) Determining the performance requirements of the drone according to the mission parameters;
iii) Determining the diameter of the lattice voxels needed for the drone;
iv) Determining the design of the adaptable lattice structure;
v) Finalizing the design; and
vi) Constructing the adaptable lattice structure.

In some examples, not all of these steps are required. In some examples, the steps may be in a different order. In some examples, some of the steps happen simultaneously.

It is clear to a person skilled in the art that the statements set forth herein may be implemented under use of hardware circuits, software means, or a combination thereof. The software means can be related to programmed microprocessors or a general computer, an ASIC (Application Specific Integrated Circuit) and/or DSPs (Digital Signal Processors). For example, the processing unit may be implemented at least partially as a computer, a logical circuit, an FPGA (Field Programmable Gate Array), a processor (for example, a microprocessor, microcontroller (µC) or an array processor)/a core/a CPU (Central Processing Unit), an FPU (Floating Point Unit), NPU (Numeric Processing Unit), an ALU (Arithmetic Logical Unit), a Coprocessor (further microprocessor for supporting a main processor (CPU)), a GPGPU (General Purpose Computation on Graphics Processing Unit), a multi-core processor (for parallel computing, such as simultaneously performing arithmetic operations on multiple main processor(s) and/or graphical processor(s)) or a DSP.

It is further clear to the person skilled in the art that even if the herein-described details will be described in terms of a method, these details may also be implemented or realized in a suitable device, a computer processor or a memory connected to a processor, wherein the memory can be provided with one or more programs that perform the method, when executed by the processor. Therefore, methods like swapping and paging can be deployed.

Even if some of the aspects described above have been described in reference to the arrangement, these aspects may also apply to the method and vice versa.

### BRIEF DESCRIPTION OF THE DRAWINGS

These and other aspects of the invention will now be further described, by way of example only, with reference to the accompanying figures, wherein like reference numerals refer to like parts, and in which:
- Figures 1a and b: show perspective views of a same shape element according to an embodiment described herein;
- Figure 2: shows a perspective view of a net of a three dimensional lattice voxel according to an embodiment as described herein;
- Figure 3: shows a perspective view of a constructed three dimensional lattice voxel according to an embodiment as described herein;
- Figure 4a: shows a perspective view of a constructed drone arm according to an embodiment as described herein;
- Figure 4b: shows a perspective view of a constructed drone section according to an embodiment as described herein;
- Figures 5a and b: show constructed drones according to embodiments as described herein; and
- Figure 6: shows a block diagram of a method of constructing an adaptable lattice structure for a multi-mission drone according to an embodiment as described herein.

### DETAILED DESCRIPTION OF THE PREFERRED EMBODIMENTS

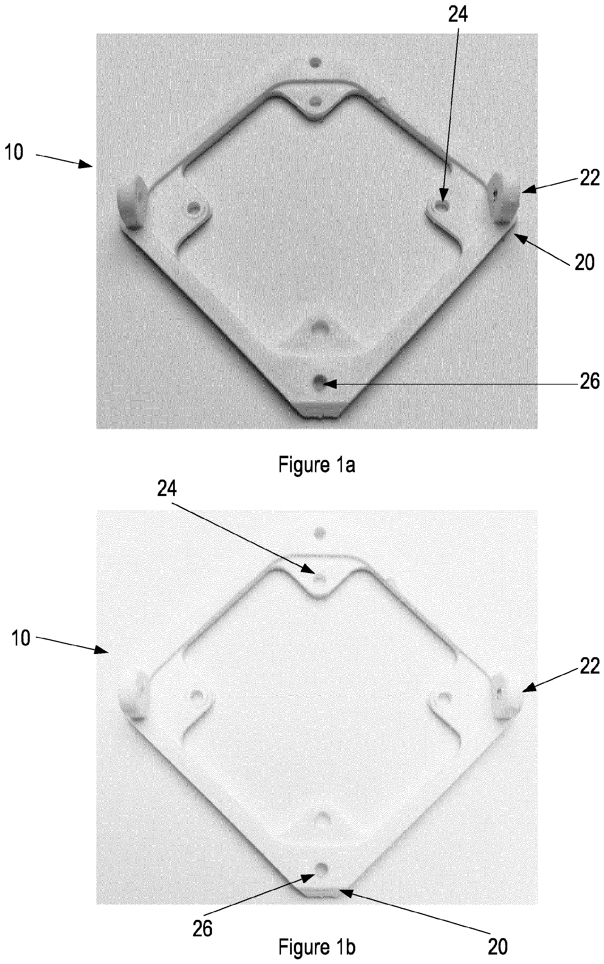

Figures 1a and b show perspective views of a same shape element according to an embodiment described herein.

Figures 1a and b show a same shape element 10. In illustrative examples, not covered by the scope of the appended claims, the same shape element 10 may be of any suitable shape. According to the invention, the same shape elements 10 are squares. The square same shape element 10 comprises a plurality of connector elements 20. There are three main types of connector hole 22, 24, 26 that make up the connector elements 20. In this embodiment, there is a connector element 20 at each corner of the same shape element 10. In some embodiments, there is a connector element 20 at only select corners and/or not located in a corner, i.e. between corners.

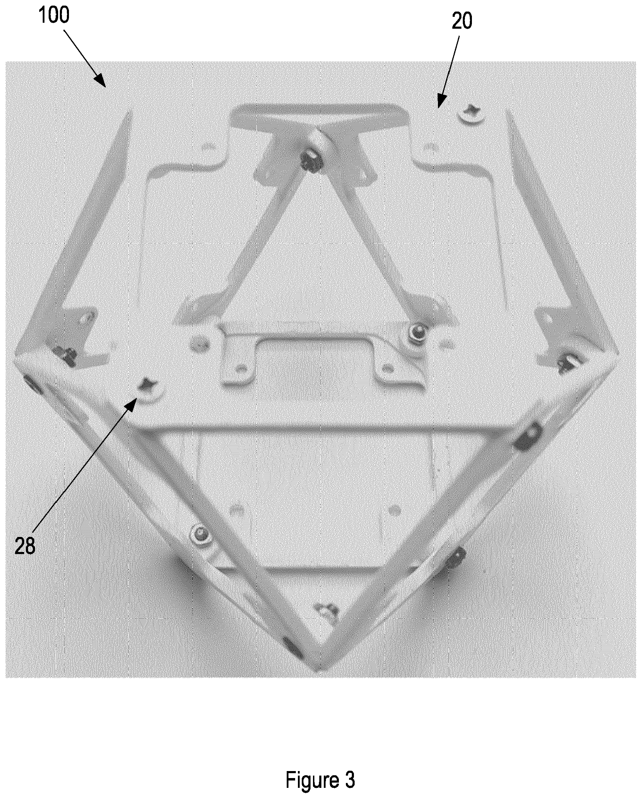

The first type of connector hole 22 is in a direction substantially parallel to the main plane of the same shape element 20. The first type of connector hole 22 may be located in a section of the same shape element 10 which projects from the main plane of the same shape element 10. The first type of connector hole 22 may allow for the same shape element 10 to be coupled to other same shape elements 10 and/or lattice voxels (see figure 3) as will be described below.

The second type of connector hole 24 is in a direction substantially perpendicular to the main plane of the same shape element 10. The second type of connector hole may be located in a section of the same shape element 10 which projects towards the center of the same shape element 10. The second type of connector hole 24 may allow for the same shape element 10 to be coupled to other same shape elements 10 and/or lattice voxels.

The third type of connector hole 26 is in a direction substantially perpendicular to the main plane of the same shape element 10. The third type of connector hole 26 may be located in the main frame of the same shape element 10 i.e. not on any section which projects from the same shape element 10. This may allow for a particularly strong coupling of the same shape element 10 to other same shape elements 10 and/or lattice voxels as the thickness of the main frame of the same shape element 10 may be more than of the projections on which the first 22 and second 24 types of connector hole are located.

A connector element 20 can have any combination of the three types of connector hole 22, 24, 26 described above. Although the connector holes 22, 24, 26 are described as being parallel or perpendicular to the main plane of the same shape element 10, the connector holes 22, 24, 26 may be of any suitable orientation in relation to the main plane.

The main frame of the same shape element 10 nay be of any thickness or size which allows for the three dimensional voxel to be constructed.

In some embodiments not shown, the same shape element 10 further comprises a strengthening element. This strengthening element may be coupled to opposite beams of the same shape element 10 and allow for a stronger construction of the same shape element 10. The strengthening element may be comprised of the same material as the same shape element 10 or a different material.

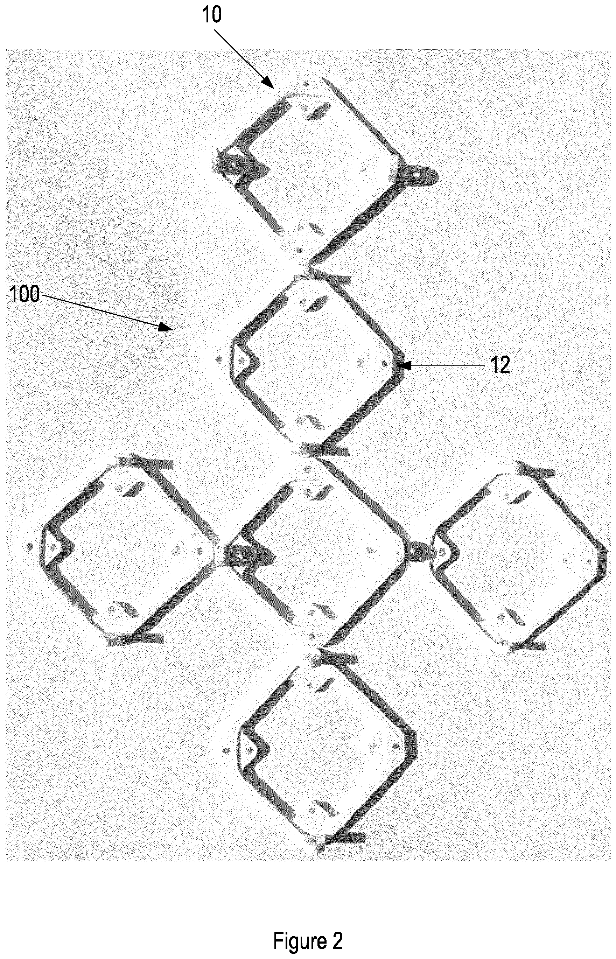

Figure 2 shows a perspective view of a net of a three dimensional lattice voxel according to an embodiment as described herein.

The net for the three dimensional lattice voxel 100 in this embodiment comprises six same shape elements 10, 12. The net may alternatively comprise any number of same shape elements 10, 12 according to the size of the lattice voxel 100 and the parameters of the mission which the drone will be undertaking. The connector holes 22, 24, 26 of each same shape element 10, 12 are aligned so as to form a secure connection between the same shape elements.

Figure 3 shows a perspective view of a constructed three dimensional lattice voxel according to an embodiment as described herein.

It can be seen that the completed lattice voxel 100 comprises six of the same shape elements 10, 12. According to the invention defined by the appended claims, the lattice voxel 100 forms a tetradecahedron but in other illustrative examples not covered by the scope of the claims, the lattice voxel 100 may be of any three dimensional shape. One half of the lattice voxel 100 is formed by coupling three of the same shape elements 10, 12 via the connector elements 20 on each respective same shape element 10. The same shape elements 10, 12 are coupled in such a way so as to form a triangle between each of the same shape elements 10, 12 and a further triangle at the top of the half. The two halves of the lattice voxel 100 are then coupled together. Alternatively, the lattice voxel 100 may be constructed via any suitable method.

In some embodiments, the same shape elements 10, 12 may be flush to each other and there may be no gap between the same shape elements 10, 12. In some embodiments, there is a mixture of flush same shape elements 10, 12 and same shape elements 10, 12 with gaps between them. In some embodiments, the gap is not triangular in shape but can be of any suitable shape.

In this embodiment, the same shape elements 10, 12 of the lattice voxel 100 are coupled via screws 28 and bolts. These are preferably M2 screws and bolts but may be any type of screw or bolt. The couplings may be made additionally or alternatively by any suitable coupling means.

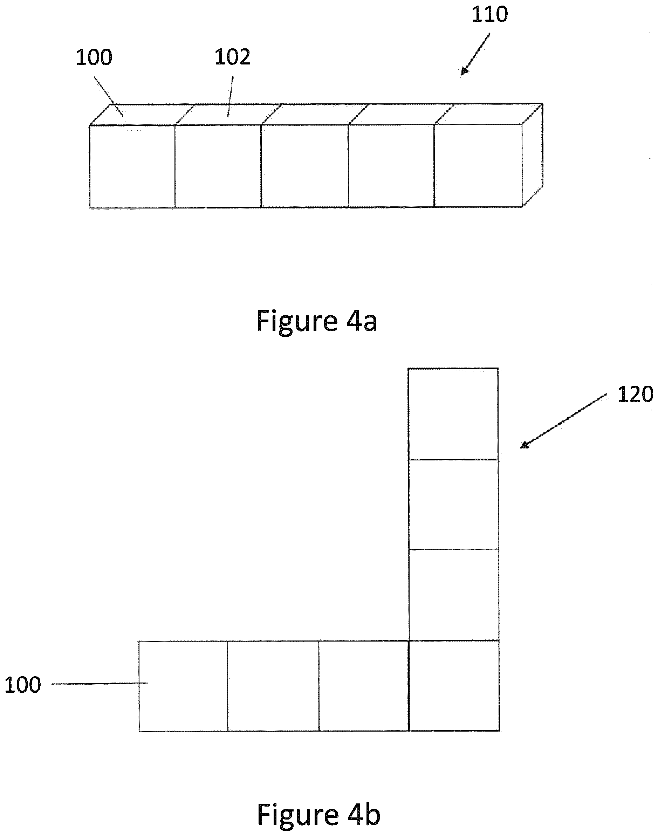

Figure 4a shows a perspective view of a constructed drone arm according to an embodiment as described herein.

In this embodiment, the lattice voxels 100, 102 are depicted as cubes but they may be of any suitable shape. The lattice voxels 100, 102 are coupled by coupling one or more connector elements 20 from a first lattice voxel 100 to one or more connector elements 20 from on a second lattice voxel 102. The couplings between the lattice voxels 100, 102 may be achieved by the same method as the couplings between the same shape elements 10, 12 described above.

The drone arm 110 is constructed by coupling a plurality of lattice voxels 100, 102 to each other. The drone arm 110 may be of any suitable size.

Figure 4b shows a perspective view of a constructed drone section according to an embodiment as described herein.

The drone section 120 is constructed in a similar way as to how the drone arm 110 is constructed. In this embodiment, two drone arms 110 are coupled together by a central lattice voxel 100 to form a L-shape so as to form the drone section 120. The drone section 120 may be of any suitable shape.

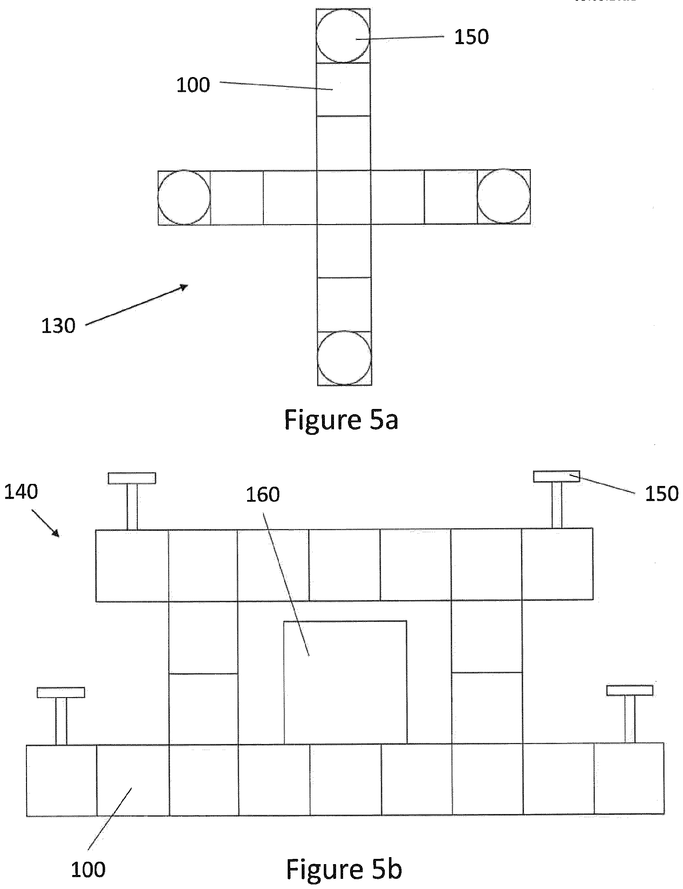

Figures 5a and b show constructed drones according to embodiments as described herein.

Figure 5a shows a drone 130 constructed by 13 lattice voxels 100 in a cross shape. In this embodiment, the height of the drone is one voxel 100, i.e. voxels 100 are not coupled on top of one another. The drone 130 also comprises a propeller 150 at the end of each arm. The propellers 150 are powered by an onboard system (not shown). The may be any number of propellers 150 coupled to the drone 130. The propellers 150 may be any type of propeller 150 but are preferably carbon propellers 150 powered by a brushless motor. Each brushless motor may power a single propeller 150 or may power a plurality of propellers 150. In some embodiments, one or more propellers may be positioned on the underside of the drone 130, i.e. in a direction substantially towards the ground while the drone 130 is in flight. The design of the drone 130 may be altered by removing and/or adding lattice voxels 100 at suitable places.

Figure 5b shows a larger drone 140. In this embodiment, lattice voxels 100 are stacked on top of each other. There are also propellers 150 at the end of each arm of the drone 140. In the center of the drone 140, there is an adaptable system 160. The adaptable system 160 comprises at least one of a cargo and a payload. The adaptable system may further comprise at least one of a battery for powering onboard components and a propulsion system. In illustrative examples, not covered by the scope of the appended claims, the adaptable system may further comprise a camera system or any other suitable component.

The adaptable system 160 may be adapted by adding and/or removing components based on the mission the drone 140 is undertaking. The battery may be of any capacity but is preferably between 3500mAh and 6000mAh. The propulsion system may be any method of propulsion that allows the drone 140 to move. This propulsion system may be in addition to, or an alternative to, the propellers 150 on the drone 140. Any number of lattice voxels 100 may be coupled to the adaptable system 160. The adaptable system 160 may be coupled to the lattice voxels 100 by any suitable coupling means.

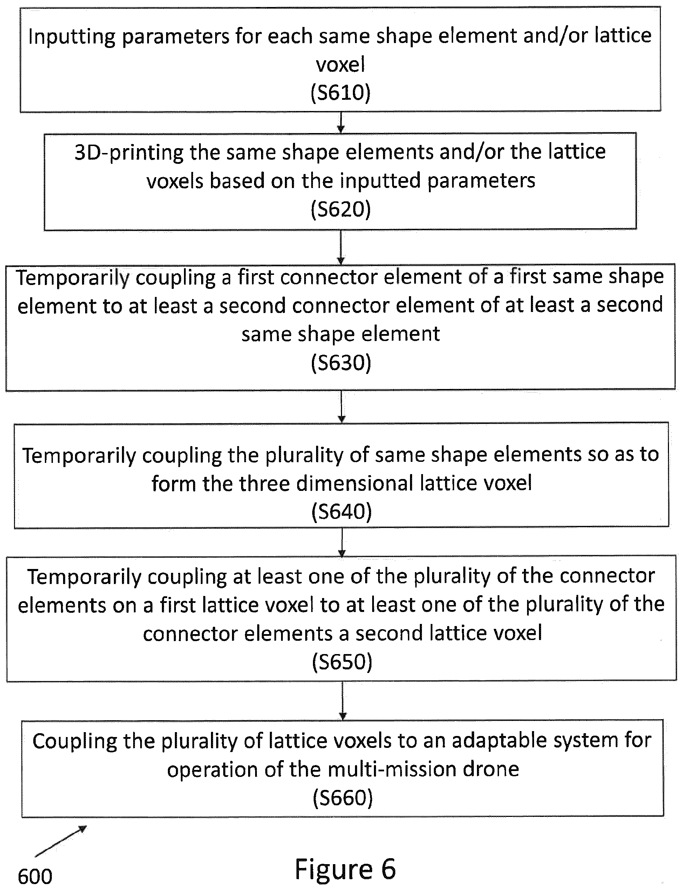

Figure 6 shows a block diagram of a method of constructing an adaptable lattice structure for a multi-mission drone according to an embodiment as described herein. The construction of the adaptable lattice structure 110, 120, 130, 140 is based on four main steps:
(i) temporarily coupling (S630) a first connector element of a first same shape element to at least a second connector element of at least a second same shape element;
(ii) temporarily coupling (S640) the plurality of same shape elements so as to form a tetradecahedron; and
(iii) temporarily coupling (S650) at least one of the plurality of the connector elements on a first lattice voxel to at least one of the plurality of the connector elements a second lattice voxel;
(iv) temporarily coupling (S660) at least one of the plurality of lattice voxels to an adaptable system for operation of the UAS, wherein the adaptable system comprises at least one of a cargo and a payload.

The method 600 may be undertaken by hand, by 3D-printing, as described in more detail below, or combination of hand and 3D-printing or by any other suitable method.

The temporary coupling of the first 10 and second 12 same shape elements allows for the lattice voxel 100 for which the same shape elements 10, 12 are part of to be taken apart is need be. It may also allow for the size of the lattice voxel 100 to be increased or decreased should more or fewer same shape elements 10, 12 be incorporated into the lattice voxel 100. The temporary coupling is preferably completed by a screw and nut but may be completed by using any suitable temporary coupling means.

After the first 10 and second 12 same shape elements have been temporarily coupled S630, the plurality of same shape elements 10, 12 are then temporarily coupled S640 to form a lattice voxel 100. The temporary coupling may be completed in a similar fashion as the temporary coupling for the first 10 and second 12 same shape elements. The temporary coupling may allow for the size of the lattice voxel 100 to be increased or decreased by adding or removing same shape elements 10, 12. The size of the lattice voxel may be increased or decreased dependent on the parameters of the mission the drone 130, 140 is undertaking.

After constructing the lattice voxel 100, a plurality of voxels 100, 102 are then temporarily coupled S650. This temporary coupling forms a drone arm 110, a drone section 120 or a completed drone 130, 140. The temporary coupling of the lattice voxels 100, 102 allows from the size of the drone 130, 140 to be altered dependent on the mission the drone 130, 140 is undertaking.

In some embodiments, parameters are input S610 to a computer program for each same shape element 10, 12 and/or each lattice voxel 100, 102. These parameters may be a lattice voxel size, a first thickness, a second thickness, a dimension of the plurality of connector elements, a parameter of the plurality of connector elements or any other suitable parameter. In some embodiments, all of the same shape elements 10, 12 and/or lattice voxels 100, 102 have the same parameters. Alternatively, some of the same shape elements 10, 12 and/or lattice voxels 100, 102 may have different parameters. The computer program may be CATIA V5, a visual scripting tool, or any other suitable computer program for altering the parameters. The lattice voxels 100, 102 may be of any size but are preferably between 38mm and 500mm in diameter. In some examples, the diameters of lattice voxels in the same adaptable lattice structure are not the same. In a non-limiting example, some voxels may be 100mm in diameter whereas others are 200mm in diameter, wherein these voxels are coupled by an adaptor voxel as described above.

In some embodiments, the same shape elements 10, 12 and/or lattice voxels 100, 102 are 3D-printed. This may allow for a particularly fast construction of lattice voxels 100, 102 and therefore, a particularly fast construction of a drone 130, 140. It may also allow for replacement parts to be procured quickly. 3D-printing may also allow for individual elements of the same shape elements 10, 12 to be made of different materials. Alternatively, the same shape elements 10, 12 and/or the lattice voxels 100, 120 may be made in a factory in a mass-produced manner or in any other suitable manner.

The adaptable system 160 may be similar to the adaptable system described above in relation to figure 5b.

No doubt many other effective alternatives will occur to the skilled person. It will be understood that the invention is not limited to the described embodiments and encompasses modifications apparent to those skilled in the art and lying within the scope of the claims appended hereto.

## Claims

1. An adaptable lattice structure (110, 120, 130, 140) for an Unmanned Aerial System, UAS, comprising:
a plurality of lattice voxels (100, 102), wherein each lattice voxel (100, 102) comprises:
a plurality of same shape elements (10, 12), wherein the same shape elements (10, 12) are squares;
wherein each same shape element (10, 12) comprises a plurality of connector elements (20), wherein the plurality of connector elements (20) is configured to temporarily couple a first same shape element (10) to at least a second same shape element (12);
wherein the plurality of same shape elements (10, 12) is configured to be temporarily coupled so as to form a tetradecahedron (100);
wherein at least one of the connector elements (20) on a first lattice voxel (100) is configured to temporarily couple the first lattice voxel (100) to a second lattice voxel (102); and
wherein at least one of the plurality of lattice voxels (100, 102) is configured to be temporarily coupled to an adaptable system (160) for operation of the UAS, wherein the adaptable system (160) comprises at least one of:
- a cargo; and
- a payload.

2. The adaptable lattice structure (110, 120, 130, 140) of claim 1, wherein the plurality of connector elements (20) on the first same shape element (10) comprise a first at least one connector hole (22, 24, 26) configured to be alignable with a second at least one connector hole (22, 24, 26) on the second same shape element (12) and/or the second lattice voxel (102).

3. The adaptable lattice structure (110, 120, 130, 140) of any preceding claim, wherein at least one of the plurality of lattice voxels (100, 102) is configured to be temporarily coupled to an adaptable system (160) for operation of the UAS, wherein the adaptable system (160) further comprises at least one of:
- a battery; and
- a propulsion system.

4. The adaptable lattice structure (110, 120, 130, 140) of any preceding claim, wherein each of the plurality of same shape elements (10, 12) and/or the plurality of lattice voxels (100, 102) are 3D-printed.

5. The adaptable lattice structure (110, 120, 130, 140) of claim 4, wherein the first and second same shape elements (10, 12) and/or the first and second lattice voxels (100, 102) are configured to be temporarily coupled during the 3D-printing process.

6. The adaptable lattice structure (110, 120, 130, 140) of any of the preceding claims, wherein at least one parameter of the plurality of same shape elements (10, 12) and/or the plurality of lattice voxels (100, 102) is configured to be changed before the manufacture of said plurality of same shape elements (10, 12) and/or plurality of lattice voxels (100, 102) via a computer program, wherein the parameters comprise:
- a lattice voxel size;
- a first thickness;
- a second thickness;
- a dimension of the plurality of connector elements; and
- a parameter of the plurality of connector elements.

7. A UAS comprising the adaptable lattice structure (110, 120, 130, 140) of any of the preceding claims.

8. A method (600) for constructing an adaptable lattice structure for an Unmanned Aerial System, UAS:
wherein the adaptable lattice structure comprises a plurality of lattice voxels, wherein each lattice voxel comprises a plurality of same shape elements, wherein the same shape elements are squares, and wherein each same shape element comprises a plurality of connector elements; wherein the method comprises:
temporarily coupling (S630) a first connector element of a first same shape element to at least a second connector element of at least a second same shape element;
temporarily coupling (S640) the plurality of same shape elements so as to form a tetradecahedron;
temporarily coupling (S650) at least one of the plurality of the connector elements on a first lattice voxel to at least one of the plurality of the connector elements a second lattice voxel; and
temporarily coupling (S660) at least one of the plurality of lattice voxels to an adaptable system for operation of the UAS, wherein the adaptable system comprises at least one of:
- a cargo; and
- a payload.

9. The method (600) of claim 8, wherein the plurality of connector elements on the first same shape element comprise a first at least one connector hole, and wherein the method further comprises aligning a second at least one connector hole on the second same shape element and/or the second lattice voxel with the first at least one connector hole.

10. The method (600) of claim 8 or 9, further comprising temporarily coupling (S660) at least one of the plurality of lattice voxels to an adaptable system for operation of the UAS, wherein the adaptable system further comprises at least one of:
- a battery; and
- a propulsion system.

11. The method (600) of any one of claims 8 to 10, further comprising 3D-printing (S620) each of the plurality of same shape elements and/or the plurality of lattice voxels.

12. The method (600) of any of claims 8 to 11, further comprising changing (S610) at least one parameter of the plurality of same shape elements and/or the plurality of lattice voxels before the manufacture of said plurality of same shape elements and/or plurality of lattice voxels, wherein the parameters comprise:
- a lattice voxel size;
- a first thickness;
- a second thickness;
- a dimension of the plurality of connector elements; and
- a parameter of the plurality of connector elements.

13. A use of the adaptable lattice structure (110, 120, 130, 140) for a UAS according to any of claims 1 to 6 and/or a use of the UAS according to claim 7 and/or a use of the method (600) for constructing an adaptable lattice structure for a multi-mission drone according to any one of claims 8 to 12.

## Patentansprüche

1. Anpassbare Gitterstruktur (110, 120, 130, 140) für ein unbemanntes Luftfahrtsystem, UAS, umfassend:
eine Vielzahl von Gittervoxeln (100, 102), wobei jedes Gittervoxel (100, 102) umfasst:
eine Vielzahl von gleichförmigen Elementen (10, 12), wobei die gleichförmigen Elemente (10, 12) Quadrate sind;
wobei jedes gleichförmige Element (10, 12) eine Vielzahl von Verbindungselementen (20) umfasst, wobei die Vielzahl von Verbindungselementen (20) konfiguriert ist, ein erstes gleichförmiges Element (10) vorübergehend mit mindestens einem zweiten gleichförmigen Element (12) zu koppeln;
wobei die Vielzahl von gleichförmigen Elemente (10, 12) konfiguriert sind, vorübergehend gekoppelt zu werden, um ein Tetradekaeder (100) zu bilden;
wobei mindestens eines der Verbindungselemente (20) auf einem ersten Gittervoxel (100) konfiguriert ist, das erste Gittervoxel (100) vorübergehend mit einem zweiten Gittervoxel (102) zu koppeln; und
wobei mindestens eines der Vielzahl von Gittervoxel (100, 102) konfiguriert ist, vorübergehend mit einem anpassbaren System (160) für den Betrieb des UAS gekoppelt zu sein, wobei das anpassbare System (160) mindestens eines umfasst von:
- einer Ladung; und
- einer Nutzlast.

2. Anpassbare Gitterstruktur (110, 120, 130, 140) nach Anspruch 1, wobei die Vielzahl von Verbindungselementen (20) auf dem ersten gleichförmigen Element (10) ein erstes, mindestens ein Verbindungsloch (22, 24, 26) umfasst, das konfiguriert ist, mit einem zweiten, mindestens einem Verbindungsloch (22, 24, 26) auf dem zweiten gleichförmigen Element (12) und/oder dem zweiten Gittervoxel (102) ausrichtbar zu sein.

3. Anpassbare Gitterstruktur (110, 120, 130, 140) nach einem vorhergehenden Anspruch, wobei mindestens eines der Vielzahl von Gittervoxel (100, 102) konfiguriert ist, vorübergehend mit einem anpassbaren System (160) zum Betrieb des UAS gekoppelt zu werden, wobei das anpassbaree System (160) ferner mindestens eines umfasst von:
- einer Batterie; und
- einem Antriebssystem.

4. Anpassbare Gitterstruktur (110, 120, 130, 140) nach einem vorhergehenden Anspruch, wobei jedes der Vielzahl von gleichförmigen Elementen (10, 12) und/oder der Vielzahl von Gittervoxel (100, 102) 3D-gedruckt ist.

5. Anpassbare Gitterstruktur (110, 120, 130, 140) nach Anspruch 4, wobei das erste und das zweite gleichförmige Element (10, 12) und/oder das erste und das zweite Gittervoxel (100, 102) konfiguriert sind, während des 3D-Druckverfahrens vorübergehend gekoppelt zu werden.

6. Anpassbare Gitterstruktur (110, 120, 130, 140) nach einem der vorhergehenden Ansprüche, wobei mindestens ein Parameter der Vielzahl von gleichförmigen Elementen (10, 12) und/oder der Vielzahl von Gittervoxeln (100, 102) konfiguriert ist, vor der Herstellung der Vielzahl von gleichförmigen Elementen (10, 12) und/oder der Vielzahl von Gittervoxeln (100, 102) über ein Computerprogramm geändert zu werden, wobei die Parameter umfassen:
- eine Gittervoxelgröße;
- eine erste Dicke;
- eine zweite Dicke;
- eine Dimension der Vielzahl von Verbindungselementen; und
- einen Parameter der Vielzahl von Verbindungselementen.

7. UAS mit der anpassbarer Gitterstruktur (110, 120, 130, 140) nach einem der vorhergehenden Ansprüche.

8. Verfahren (600) zur Konstruktion einer anpassbaren Gitterstruktur für ein unbemanntes Luftfahrtsystem, UAS:
wobei die anpassbare Gitterstruktur eine Vielzahl von Gittervoxeln umfasst, wobei jedes Gittervoxel eine Vielzahl von gleichförmigen Elementen umfasst, wobei die gleichförmigen Elemente Quadrate sind und wobei jedes gleichförmige Element eine Vielzahl von Verbindungselementen umfasst; wobei das Verfahren umfasst:
vorübergehendes Koppeln (S630) eines ersten Verbindungselements eines ersten gleichförmigen Elements mit mindestens einem zweiten Verbindungselement mindestens eines zweiten gleichförmigen Elements;
vorübergehendes Koppeln (S640) der Vielzahl von gleichförmigen Elemente, um ein Tetradekaeder zu bilden;
vorübergehendes Koppeln (S650) mindestens eines der Vielzahl der Verbindungselemente auf einem ersten Gittervoxel mit mindestens einem der Vielzahl der Verbindungselemente auf einem zweiten Gittervoxel; und
vorübergehendes Koppeln (S660) mindestens eines der Vielzahl von Gittervoxel mit einem anpassbaren System zum Betrieb des UAS, wobei das anpassbare System mindestens eines umfasst von:
- einer Ladung; und
- einer Nutzlast.

9. Verfahren (600) nach Anspruch 8, wobei die Vielzahl von Verbindungselementen auf dem ersten gleichförmigen Element ein erstes, mindestens ein Verbindungsloch umfasst, und wobei das Verfahren ferner ein Ausrichten eines zweiten, mindestens einen Verbindungslochs auf dem zweiten gleichförmigen Element und/oder dem zweiten Gittervoxel mit dem ersten, mindestens einen Verbindungsloch umfasst.

10. Verfahren (600) nach Anspruch 8 oder 9, das ferner umfasst:
vorübergehendes Koppeln (S660) mindestens eines der Vielzahl von Gittervoxel mit einem anpassbaren System zum Betrieb des UAS, wobei das anpassbare System ferner mindestens eines umfasst von:
- einer Batterie; und
- einem Antriebssystem.

11. Verfahren (600) nach einem der Ansprüche 8 bis 10, das ferner ein 3D-Drucken (S620) jedes der Vielzahl von gleichförmigen Elementen und/oder der Vielzahl von Gittervoxeln umfasst.

12. Verfahren (600) nach einem der Ansprüche 8 bis 11, das ferner ein Ändern (S610) mindestens eines Parameters der Vielzahl von gleichförmigen Elementen und/oder der Vielzahl von Gittervoxeln vor der Herstellung der Vielzahl von gleichförmigen Elementen und/oder der Vielzahl von Gittervoxeln umfasst, wobei die Parameter umfassen:
- eine Gittervoxelgröße;
- eine erste Dicke;
- eine zweite Dicke;
- eine Dimension der Vielzahl von Verbindungselementen; und
- einen Parameter der Vielzahl von Verbindungselementen.

13. Verwendung der anpassbaren Gitterstruktur (110, 120, 130, 140) für ein UAS nach einem der Ansprüche 1 bis 6 und/oder eine Verwendung des UAS nach Anspruch 7 und/oder eine Verwendung des Verfahrens (600) zur Konstruktion einer anpassbaren Gitterstruktur für eine Multimissionsdrohne nach einem der Ansprüche 8 bis 12.

## Revendications

1. Structure en treillis (110, 120, 130, 140) adaptable pour un système aérien sans pilote à bord, UAS, comprenant:
une pluralité de voxels de treillis (100, 102), dans lequel chaque voxel de treillis (100, 102) comprend:
une pluralité d'éléments (10, 12) de même forme, dans lequel les éléments (10, 12) de même forme sont carrés;
dans lequel chaque élément (10, 12) de même forme comprend une pluralité d'éléments connecteurs (20), dans lequel la pluralité d'éléments connecteurs (20) est conçue pour accoupler temporairement un premier élément (10) de même forme à au moins un second élément (12) de même forme;
dans lequel la pluralité d'éléments (10, 12) de même forme est conçue pour être temporairement accouplée de manière à former un tétradécaèdre (100);
dans lequel au moins l'un parmi les éléments connecteurs (20) sur un premier voxel en treillis (100) est conçu pour accoupler temporairement le premier voxel en treillis (100) au second voxel en treillis (102); et
dans lequel au moins l'un parmi la pluralité de voxels en treillis (100, 102) est conçu pour être accouplé temporairement au système adaptable (160) pour le fonctionnement du UAS, dans lequel le système adaptable (160) comprend au moins l'un parmi:
- une cargaison; et
- une charge.

2. Structure en treillis (110, 120, 130, 140) adaptable selon la revendication 1, dans lequel la pluralité d'éléments connecteurs (20) sur le premier élément (10) de même forme comprend au moins un premier trou de connecteur (22, 24, 26) ménagé pour pouvoir s'aligner avec au moins un second trou de connecteur (22, 24, 26) sur le second élément (12) de même forme et/ou le second voxel en treillis (102).

3. Structure en treillis (110, 120, 130, 140) adaptable selon l'une quelconque revendication précédente, dans lequel au moins l'un parmi la pluralité de voxels en treillis (100, 102) est conçu pour être accouplé temporairement au système adaptable (160) pour le fonctionnement du UAS, dans lequel le système adaptable (160) comprend en outre au moins l'un parmi:
- une batterie; et
- un système de propulsion.

4. Structure en treillis (110, 120, 130, 140) adaptable selon l'une quelconque revendication précédente, dans lequel chacun parmi la pluralité d'éléments (10, 12) de même forme et/ou parmi la pluralité de voxels en treillis (102, 102) sont imprimés en 3D.

5. Structure en treillis (110, 120, 130, 140) adaptable selon la revendication 4, dans lequel les premier et second éléments (10, 12) de même forme et/ou les premier et second voxels en treillis (100, 102) sont conçus pour être temporairement accouplés pendant le processus d'impression en 3D.

6. Structure en treillis (110, 120, 130, 140) adaptable selon l'une quelconque des revendications précédentes, dans lequel au moins un paramètre de la pluralité des éléments (10, 12) de même forme et/ou la pluralité de voxels en treillis (100, 102) est configuré pour être modifié avant la fabrication de ladite pluralité d'éléments (10, 12) de même forme et/ou de la pluralité de voxels en treillis (100, 102) au moyen d'un programme d'ordinateur, dans lequel les paramètres comprennent:
- une taille de voxel en treillis;
- une première épaisseur;
- une seconde épaisseur;
- une dimension de la pluralité d'éléments connecteurs; et
- un paramètre de la pluralité d'éléments connecteurs.

7. UAS comprenant la structure en treillis (110, 120, 130, 140) adaptable selon l'une quelconque des revendications précédentes.

8. Procédé (600) de construction d'une structure en treillis adaptable pour un système aérien sans pilote à bord, UAS:
dans lequel la structure en treillis adaptable comprend une pluralité de voxels en treillis, dans lequel chaque voxel en treillis comprend une pluralité d'éléments de même forme, dans lequel les éléments de même forme sont des carrés, et dans lequel chaque élément de même forme comprend une pluralité d'éléments connecteurs; le procédé comprenant:
l'accouplement temporaire (S630) d'un premier élément connecteur d'un premier élément de même forme à au moins un second élément connecteur d'au moins un second élément de même forme;
l'accouplement temporaire (S640) de la pluralité d'éléments de même forme de manière à former un tétradécaèdre;
l'accouplement temporaire (S650) d'au moins un élément connecteur parmi la pluralité d'éléments connecteurs sur un premier voxel en treillis à au moins un élément connecteur parmi la pluralité d'éléments connecteurs sur un second voxel en treillis; et
l'accouplement temporaire (S660) d'au moins un voxel en treillis parmi la pluralité de voxels en treillis à un système adaptable pour le fonctionnement du UAS, dans lequel le système adaptable comprend au moins l'un parmi:
- une cargaison; et
- une charge.

9. Procédé (600) selon la revendication 8, dans lequel la pluralité d'éléments connecteurs sur le premier élément de même forme comprend au moins un premier trou de connecteur, et dans lequel le procédé comprend en outre l'alignement d'au moins un second trou de connecteur sur le second élément de même forme et/ou le second voxel en treillis avec au moins le premier trou de connecteur.

10. Procédé (600) selon la revendication 8 ou 9, comprenant en outre l'accouplement temporaire (S660) d'au moins un voxel en treillis parmi la pluralité de voxels en treillis à un système adaptable pour le fonctionnement du UAS, dans lequel le système adaptable comprend au moins l'un parmi:
- une batterie; et
- un système de propulsion.

11. Procédé (600) selon l'une quelconque des revendications 8 à 10, comprenant en outre l'impression en 3D (S620) de chacun de la pluralité d'éléments de même forme et/ou de la pluralité de voxels en treillis.

12. Procédé (600) selon l'une quelconque des revendications 8 à 11, comprenant en outre la modification (S610) d'au moins un paramètre de la pluralité d'éléments de même forme et/ou la pluralité de voxels en treillis avant la fabrication de ladite pluralité d'éléments de même forme et/ou de la pluralité de voxels en treillis, dans lequel les paramètres comprennent:
- une taille de voxel en treillis;
- une première épaisseur;
- une seconde épaisseur;
- une dimension de la pluralité d'éléments connecteurs; et
- un paramètre de la pluralité d'éléments connecteurs.

13. Utilisation de la structure en treillis (110, 120, 130, 140) adaptable, pour un UAS selon l'une quelconque des revendications 1 à 6, et/ou utilisation du UAS selon la revendication 7 et/ou utilisation du procédé (600) de fabrication d'une structure en treillis adaptable pour un drone multi-mission selon l'une quelconque des revendications 8 à 12.
